(19) Europäisches Patentamt
European Patent Office
Office européen des brevets

(11) EP 0 556 359 B1

(12) EUROPÄISCHE PATENTSCHRIFT

(45) Veröffentlichungstag und Bekanntmachung des Hinweises auf die Patenterteilung:
**16.06.1999 Patentblatt 1999/24**

(21) Anmeldenummer: **92918102.2**

(22) Anmeldetag: **03.09.1992**

(51) Int Cl.[6]: **G05B 23/02**, D01H 13/32

(86) Internationale Anmeldenummer:
**PCT/CH92/00180**

(87) Internationale Veröffentlichungsnummer:
**WO 93/05477 (18.03.1993 Gazette 1993/08)**

(54) **SYSTEM ZUR ERSTELLUNG EINER STÖRUNGSDIAGNOSE AN PRODUKTIONSMASCHINEN**

SYSTEM FOR DIAGNOSING PRODUCTION MACHINE MALFUNCTIONS

SYSTEME POUR LE DIAGNOSTIC DE DERANGEMENTS DANS UNE MACHINE DE PRODUCTION

(84) Benannte Vertragsstaaten:
**BE DE ES FR GB IT**

(30) Priorität: **10.09.1991 CH 265191**

(43) Veröffentlichungstag der Anmeldung:
**25.08.1993 Patentblatt 1993/34**

(73) Patentinhaber: **ZELLWEGER LUWA AG**
**8610 Uster (CH)**

(72) Erfinder: **HOELLER, Robert**
**CH-8610 Uster (CH)**

(74) Vertreter: **Ellenberger, Maurice**
**Zellweger Luwa AG,**
**Patentabteilung**
**8610 Uster (CH)**

(56) Entgegenhaltungen:
**EP-A- 0 249 741**

- **COMPUTERS IN INDUSTRY Bd. 16, Nr. 1, April 1991, AMSTERDAM NL Seiten 35 - 38 R. SITTE, H.B. HARRISON 'Use of an expert system for quality improvement in flexible manufacturing of integrated circuits'**
- **1986 PROCEEDINGS, FALL JOINT CONFERENCE November 1986, DALLAS US Seiten 269 - 276 D.I. MOLDOVAN, C.I. WU 'Parallel processing of a knowledge-based vision system'**
- **ELEKTROTECHNISCHE ZEITSCHRIFT - ETZ Bd. 109, Nr. 21, November 1988, BERLIN DE Seiten 1002 - 1006 T.CHRISTALLER, H.-W. GüSGEN J. HERTZBERG, M. LINSER, A. VOSS, H.VOSS 'Expertise und ihre Modellierung auf dem Rechner'**
- **ELECTRO 1988 CONFERENCE RECORD Bd. 13, Mai 1988, LOS ANGELES US Seiten 1 - 7 T.R. VANDERPOOL 'Expert systems-the value to manufacturing'**
- **CONFERENCE RECORD OF THE 1989 IEEE INDUSTRY APPLICATIONS SOCIETY ANNUAL MEETING Bd. 2, Oktober 1989, SAN DIEGO US Seiten 1452 - 1456 R.L. MOORE H. ROSENOF, G. STANLEY 'Process control using the G2 real-time expert system'**
- **EXPERT SYSTEMS Bd. 3, Nr. 1, Januar 1986, ABINGDON GB Seiten 22 - 29 P.A. SACHS, A.M. PATERSON, M.H.M. TURNER 'Escort-an expert system for complex operations in real time'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 556 359 B1

Printed by Jouve, 75001 PARIS (FR)

## Beschreibung

Die vorliegende Erfindung betrifft ein System zur Erstellung einer Störungsdiagnose an Produktionsmaschinen anhand einer wissensbasierten Auswertung von die Qualität der hergestellten Produkte repräsentierenden Signalen, mit einer das für die Auswertung erforderliche Fachwissen enthaltenden Wissenbasis, mit zum Zugriff auf diese vorgesehenen Software-Einheiten, und mit einer Benutzer-Schnittstelle.

Systeme dieser Art, welche als Expertensysteme bezeichnet werden, sind seit einiger Zeit insbesondere für die Störungs- und Fehlerdiagnose elektronischer Bauteile bekannt; siehe dazu beispielsweise den Artikel "An Expert System for Help to Fault Diagnoses on VLSI Memories" von T. Viacroze et al in Journal for the International Symposium for Testing and Failure Analysis (ISTFA), Oktober/November 1988, Los Angeles, S. 153-158. Das in diesem Artikel beschriebene System analysiert zuerst die Daten des Prüfgeräts und leitet dann aus dem Wissen der Wissensbasis die entsprechenden Regeln für die Fehlerursachen ab. Dann erfolgt auf einer zweiten Stufe im Dialog mit dem Bediener eine weitere Analyse und schliesslich erfolgt eine Fehlerdiagnose, welche Vorwärts- und Rückwärts-Verstellung vorsieht.

Aus der Zeitschrift COMPUTERS IN INDUSTRY, Bd. 16, Nr.1 April 1991, Amsterdam NL, Seiten 35 - 38 ist unter dem Titel "Use of an expert system for quality improvement in flexible manufacturing of integrated circuits" ein System bekannt, mit dem eine Störungsdiagnose an Produktionsmaschinen anhand einer wissensbasierten Auswertung von Signalen, die die Qualität der hergestellten Produkte repräsentieren, möglich ist.

Aus 1986 PROCEEDINGS, FALL JOINT CONFERENCE; November 1986, Dallas U.S.; Seiten 269 - 276 ist unter dem Titel "Parallel Processing of a Knowledge-Based Vision System" eine Wissensbasis bekannt, die das für die Auswertung eines Bildes erforderliche Fachwissen in einer Komponentenhierarchie aufweist, die in Form einer Baumstruktur gegliedert ist.

Systeme, die zur Diagnose bei komplex aufgebauten Maschinen effizient eingesetzt werden sollen, müssen in der Lage sein, zumindest einige hundert Einzelteile und deren Einordnung in Baugruppen oder Subsysteme zu beschreiben, sowie typischerweise bis zu 100 oder 200 Regeln anzuwenden. Daneben muss eine gute Integration in eine konventionelle und umfangreiche Programmumgebung, welche die Speicherung und Vorverarbeitung der erwähnten Signale durchführt, gewährleistet sein. In der Praxis wird ausserdem eine Reaktionszeit im Sekundenbereich, nach Möglichkeit sogar darunter, erwartet. Gegenwärtig können derartige Anforderungen nur von grossen Systemen erfüllt werden, deren Einsatz für den typischen Anwender aus Kostengründen nicht in Frage kommt.

Die Erfindung stellt sich die Aufgabe, ein System der eingangs genannten Art so auszubilden, dass mit einem kostengünstigen Rechner eine rasche und sichere Störungsdiagnose möglich ist. Diese Anforderungen ist bei Produktionsmaschinen noch wesentlich wichtiger als bei Testsystemen für elektronische Schaltungen, da bei diesen Maschinen jeder Fehler in der Regel zu fehler- oder mangelhaften Produkten führt und daher in der kürzestmöglichen Zeit behoben werden muss.

Anwendungen von Expertensystemen für Textilmaschinen sind heute praktisch noch nicht bekannt. Denn die in der Literatur als Expertensysteme bezeichneten Systeme sind typischerweise nicht wissensbasiert, sondern erzielen eine Prozesssteuerung oder Prozessoptimierung mit konventionellen Methoden. So ist beispielsweise in der US-A-4 916 625 ein Verfahren zur Optimierung des Betriebs einer Spinnmaschine unter Verwendung einer Wissensbasis beschrieben, bei welchem aber letztlich nur dem Bedienungspersonal angezeigt wird, wann eine volle Spule von der Maschine entfernt werden muss. Die Wissensbasis zieht zwar aus den Signalen von Sensoren gewisse Schlüsse auf den Zeitpunkt des Auftretens bestimmter Ereignisse, sie kann aber keinerlei Störungsdiagnosen erstellen oder Aussagen über die Ursache bei Störungen machen. Im Unterschied dazu soll die erfindungsgemässe Anwendung des Systems an Textilmaschinen eine exakte Störungsdiagnose ermöglichen.

Diese Aufgabe wird erfindungsgemäss dadurch gelöst, dass die die Qualität der hergestellten Produkte repräsentierenden Signale durch bei der Untersuchung von Parametern der Faser- oder Filamentverbände gewonnene Spektrogramme gebildet sind, dass eine erste Auswerteeinheit zur Detektion von charakteristischen Abweichungen der Spektrogramme vorgesehen ist, welche für jede derartige Abweichung einen sogenannten Störungsdeskriptor generiert, und dass eine zweite Auswerteeinheit vorgesehen ist, welche für jeden Störungsdeskriptor anhand der Wissensbasis mögliche Störungsursachen ermittelt wie im Anspruch 1 angegeben.

Im folgenden wird die Erfindung anhand eines Ausführungsbeispiels und der Zeichnungen näher erläutert; es zeigt:

| | |
|---|---|
| Fig. 1 | eine schematische Darstellung des Gesamtkonzepts eines erfindungsgemässen Expertensystems, |
| Fig. 2 | eine schematische Darstellung der Beschreibung der Maschinenstruktur in der Wissensbasis des Expertensystems von Fig. 1, |
| Fig. 3 | eine schematische Darstelung des Ablaufs der Diagnosestellung, |
| Fig. 4,5 | ein Beispiel für den Dialog mit dem System via Benutzer-Schnittstelle; und |
| Fig. 6-8 | eine Darstellung eines Praxisbeispiels. |

Fig. 1 zeigt eine mögliche Darstellung des Gesamtkonzepts eines erfindungsgemässen Expertensystems, in welchem der Wissensbasis WB zentrale Bedeutung zukommt. Die Wissensbasis WB enthält das erforderliche Fachwissen, beispielsweise also das Textilwissen, in Form von Regeln und strukturellen Beschreibungen der entsprechenden Produktionsmaschinen (Textilmaschinen) mitsamt den für die Auswertung notwendigen Parametern, wie zum Beispiel Verzügen, Durchmessern von Walzen und Zylindern, und dergleichen. Daneben sind in der Wissensbasis WB auch Verweise auf Grafiken und Texte enthalten, die bei einer Konsultation auf einem Bildschirm erscheinen können.

Auf die Wissensbasis WB kann eine Reihe von Software-Einheiten zugreifen, welche für verschiedene Funktionen vorgesehen sind. Für sämtliche Anwendungen steht der gleiche allgemeine Wissenseditor KM zur Verfügung, mit dem die Wissensbasis WB aufgebaut und gewartet werden kann, wobei der Zugriff auf die Wissensbasis für diesen Editor in jedem Fall uneingeschränkt ist. Für spezifische Anwendungen können einfachere Editiermodule EM zur Verfügung gestellt werden, bei denen aber der Zugriff auf die Wissensbasis WB zur Wahrung der Konsistenz grösseren Einschränkungen unterworfen ist.

Die in der Wissensbasis WB enthaltenen Informationen werden von einem "Produktions-System" PS verwertet, welches dem Anwender eine Konsultation anbietet und insbesondere eine einen Bildschirm aufweisende Benutzer-Schnittstelle BS enthält. Darstellungsgemäss sind drei Klassen von Produktions-Systemen vorgesehen, nämlich Regelanwendungssystemen PS-H für einfache Regelverarbeitung, Diagnosesysteme PS-D und Systeme PS-X für spezifische Anwendungen. Diese drei Klassen unterscheiden sich insbesondere in der Art der Verarbeitung des Inhalts der Wissensbasis, wie beispielsweise in der Suchstrategie oder in der Regelverarbeitung.

Fig. 2 zeigt die Strukturierung der Wissensbasis WB, welche zu jeder eine Störung anzeigenden Abweichung des überwachten Signals eine Liste mit Diagnose-Vorschlägen erstellt. Da in der Praxis ein Grossteil der möglichen Störungsursachen mit fehlerhaften Maschinenteilen zusammenhängt, benötigt das System eine möglichst genaue Beschreibung des Aufbaus der jeweiligen Textilmaschine. Insbesondere muss bekannt sein, aus welchen Teilsystemen wie Karde, Strecke, usw. sich die Produktionslinie zusammensetzt. Diese Teilsysteme lassen sich ihrerseits in Subsysteme zergliedern, usw., bis man schliesslich zu den fehlerverursachenden Konponenten (beispielsweise Zylinder, Riemchen) gelangt.

Beim erfindungsgemässen Expertensystem ist jedes Objekt durch einen Knoten in einer Baumstruktur beschrieben, wobei, mit Ausnahme des Root-Knotens, jeder Knoten von genau einem übergeordneten Knoten abhängig ist. Diese Abhängigkeit ist meist als "Part of"- oder als "Is a"-Relation zu interpretieren. Die Adressierung einzelner Knoten erfolgt mit einem Pfadnamen, der beim Namen des Knoten beginnt und zur genauen Identifizierung auch noch die Namen hierarchisch höherer Knoten beinhalten kann. Diese Pfadnamen erweisen sich insbesondere dann als sehr nützlich, wenn sich mehrere gleichnamige Knoten im System befinden, weil man sich dann sowohl auf alle gleichnamigen Objekte oder auch nur auf ein spezielles Objekt beziehen kann.

So bezeichnet beispielsweise die Adresse "Streckwerk" jedes beliebige Streckwerk, die Adresse "Streckwerk-Flyer" jedes Streckwerk an einem Flyer, und die Adresse "Streckwerk -"RS"-"M3" das Streckwerk der speziellen Ringspinnmaschine M3. In dieser Namenskonvention steckt impliziert auch das Prinzip der Vererbung. Das bedeutet, dass jeder Knoten zwar einerseits durch seine Position in der Baumstruktur eineindeutig identifizierbar ist, aber andererseits auch alle Referenzen oder Werte erbt, die sich auf ein durch einen verkürzten Pfadnamen nicht eindeutig adressierbares und daher fiktives allgemeines Objekt (z.B. "Streckwerk") beziehen.

Wie man den dem Knoten "Mittelteil" untergeordneten Knoten "Oberwalze", "Mittelzylinder", "Oberriemchen" und "Unterriemchen" in Fig. 2 entnehmen kann, können jedem Knoten Daten oder Werte zugeordnet werden (z.B. Dimensionen wie Durchmesser oder Länge, Umdrehungsgeschwindigkeiten, Zustände und dergleichen). Bei Knoten mit gleichem Wert, die mehrmals vorkommen, bedient man sich des verkürzten Pfadnamens, um die Daten nur einmal eingeben zu müssen.

Mit den Knoten selbst sind immer nur einzelne Objekte beschreibbar. Daneben können aber auch mit einem Namen versehene Relationen zwischen jeweils zwei Knoten definiert werden, was in Fig. 2 durch die dick eingezeichneten Pfeile symbolisiert ist. Mit den Relationen, denen man ebenfalls beliebig viele Werte zuordnen kann, lässt sich beispielsweise die Kraftübertragung bei einem Getriebe oder der Verzug eines Faserverbandes zwischen zwei Klemmpunkten bezeichnen. So kann beispielsweise als Wissen abgelegt werden, dass das Fasermaterial von den Hinterzylindern zu den Vorderzylindern läuft und dass dabei ein 1,3-facher Verzug auftritt.

Schliesslich werden als weitere Wisseneinheiten noch Regeln verwendet, die aus einer die Regel eindeutig identifizierenden Nummer (oder aus einem Namen), aus einer Serie von Bedingungen und aus einer einzigen Konsequenz bestehen. Eine Regel, und damit auch ihre Konsequenz, gilt als erfüllt, wenn alle Bedingungen erfüllt sind. Die Konsequenz und jede einzelne der Bedingungen bilden die Grundelemente einer Regel. Diese Grundelemente können beliebige Texte ("die Garndrehung ist zu niedrig"), verneinte Ausdrücke oder Ausdrücke mit einer Ortsangabe sein. Sowohl bei den Bedingungen als auch im Konsequenz- Teil kann auf Knoten oder Relationen zwischen Knoten Bezug genommen werden. Diese Möglichkeit, in der Regel direkt auf Knoten Bezug nehmen zu können, ist speziell für die Suchstrategie bei diagnostischen Problemen oder bei Bedienungsanleitungen sehr nützlich.

Das Expertensystem kann unter Zuhilfenahme einer beliebigen Programmiersprache realisiert werden. Wegen ihrer hervorragenden Eignung für die Auswertung der Wissensbasis WB wird aber vorzugsweise die Programmiersprache Prolog verwendet (W.F. Clocksin & C.S. Mellish "Programming in Prolog", Springer Verlag 1981).

Fig. 3 zeigt in einer anderen Darstellungsart als Fig. 1 den Aufbau eines Expertensystems zur Erstellung einer Störungsdiagnose an Textilmaschinen und gibt eine Uebersicht über den Ablauf der Diagnosestellung, wobei das System von einem Prüfgerät oder von einem On-Line-Datensystem Qualitätsdaten, insbesondere Gleichmässigkeitsdaten eines textilen Zwischen- oder Endprodukts empfängt, signifikante Abweichungen von vorgegebenen Sollwerten oder Sollkurven detektiert und die technischen Ursachen dieser Abweichungen ermittelt.

Darstellungsgemäss besteht das Expertensystem aus den drei Modulen Datenspeicherung/Datenverwaltung DV, numerische Auswerteeinheit NA und wissenbasierte Auswerteeinheit WA.

Das Modul Datenspeicherung/Datenverwaltung DV dient zum permanenten Speichern der empfangenen Prüfdaten, wobei die gespeicherten Daten jederzeit für eine Auswertung bereitgestellt werden können. Für die Speicherung und Verwaltung der Prüfdaten kann ein beliebiges, konventionelles Datenbanksystem eingesetzt werden, bei dem an Funktionalität folgendes vorausgesetzt wird:

- Uebernahme der Daten vom Prüfgerät oder On-Line-System.
- Abspeichern der Prüfdaten auf einem Langzeit-Speichermedium (z.B. Festplatte).
- Bereitstellen einer Benutzer-Schnittstelle, welche es dem Anwender erlaubt, die gespeicherten Daten wieder aufzusuchen.
- Kopieren der vom Anwender ausgewählten Daten in den Systemspeicher (RAM) des Rechners, von wo diese von den nachgeschalteten Auswerteeinheiten ausgelesen werden können.
- Bereitstellung der Messwerte der Probe; darstellungsgemäss sind diese die Punkte eines Spektrogramms, beispielsweise eines Gleichmässigkeits-, eines Haarigkeits- oder eines Drehungs-Spektrogramms (zum Thema Spektrogramm siehe beispielsweise die Publikation von R. Furter "Eveness Testing in Yarn Production: Part I", The Textile Institute 1982 und den Artikel "Neue Wege zur Messung der Haarigkeit von Garnen" von R. Furter, P. Hättenschwiler und H. Wampfler in MELLIAND TEXTILBERICHTE 69 (1988), 617-619).
- Bereitstellung von Zusatzinformationen über die Probe, wie beispielsweise Garnfeinheit, Garndrehung, Vorgarn-Nummer, Filename der Wissensbasis und dergleichen.

Die numerische Auswerteeinheit vergleicht das Spektrogramm fortlaufend mit einem vorgegebenen Grenzwert, um durch periodische Schwankungen verursachte sogenannte "Kamine" zu detektieren, die über die normale Kurve hinausragen und bei der Periodenlänge (Wellenlänge) auftreten. Durch diesen Kamin erhöht sich auch der sogenannte Variationskoeffizient (CV%), das ist die quadratische Ungleichmässigkeit, was eine störende Qualitätseinbusse des betreffenden Gespinstes bedeuten kann. Diese CV-Erhöhung ist gegeben durch die Formel:

$$\Delta CV^2 = K.\left(\sum_{i=a}^{b} S_i^2 - \sum_{i=a}^{b} S_{i,R}^2\right)$$

In dieser Formel bezeichnet $S_i$ die Amplitude des gemessenen Spektrogramms bei Kanal i, $S_{i,R}$ die Amplitude des Referenzspektrogramms bei Kanal i, a, b die Kanalnummern für Anfang und Ende des Kamins und K ist ein sensorspezifischer Proportionalitätsfaktor.

Zur Detektion eines störenden Kamins vergleicht die numerische Auswerteeinheit NA den Wert der Erhöhung des Variationskoeffizienten mit einem vorgegebenen Grenzwert. Ist diese überschritten, so wird ein Störungsdeskriptor SD generiert, welcher folgende Informationen über den Kamin enthält:

- Spektrogramm-Identifikation
- Wellenlängenbereich in Millimetern
- CV-Erhöhung in %
- Anzahl der Kanäle, über die sich der Kamin erstreckt.

Bei Verwendung der Programmiersprache Prolog wird dieser Störungsdeskriptor mittels "assert" in der Datenbasis (das ist der Arbeitsspeicher des Prolog-Systems) als sogenannter "Prolog-Fact" (das ist eine in der Datenbasis vorhandene Prolog-Struktur) abgelegt.

Die wissensbasierte Auswerteeinheit WA erstellt zu jedem Störungsdeskriptor eine Liste mit Diagnose-Vorschlägen. Da, wie schon bei Fig. 2 erwähnt wurde, in der Praxis ein Grossteil der möglichen Störungsursachen mit fehlerhaften Maschinenteilen zusammenhängt, enthält das System eine möglichst genaue Beschreibung des Aufbaus der Textilmaschinen. Diese Informationen bilden zusammen mit "Wenn-dann"-Regeln, die einen Diagnoseverdacht erhärten oder widerlegen, die anhand von Fig. 2 beschriebene Wissenbasis WB. Diese liegt in der Praxis als ASCII-Datei vor, in welcher die anhand von Fig. 2 beschriebenen Wissenseinheiten (Knoten, Werte, Relationen zwischen Knoten, Regeln) als Prolog-Facts enthalten sind.

Die Wissensbasis WB wird durch eine geeignete Anweisung in die Datenbasis eingelesen.

Zur Vorbereitung der Wissensbasis WB wird aus einem von der Datenspeicherung/Datenverwaltung DV bereitgestellten Speicherbereich der Filename der Wissensbasis WB entnommen und in die Datenbasis eingelesen. Dann werden die zum Zeitpunkt der Erstellung der Wissenbasis WB noch nicht bekannt gewesenen Teilverzüge an der Maschine berechnet. Als Beispiel seien hier die in der Praxis stark variierenden Verzüge an der Ringspinnmaschine angeführt, wobei in diesem Fall der Vorverzug fix in der Wissensbasis WB enthalten ist und sich der Gesamtverzug aus Feinheit des Vorgarns dividiert durch Garnfeinheit ergibt.

Anschliessend wird zu jeder Maschinenkomponente, die im Faserverband eine periodische Masse- oder Haarigkeits- oder gegebenenfalls Drehungsschwankung hervorrufen kann, die entsprechende Wellenlänge dieser Schwankung berechnet, und zwar als Produkt aus der Wellenlänge am Ort der Komponente und allen Verzügen zwischen dem Ort der Komponente und der Entnahmestelle der Probe. Die so berechneten Wellenlängen werden dann von der wissensbasierten Auswerteeinheit WA als Prolog-Fact in die Datenbasis eingetragen.

Wenn nun in der Datenbasis gleichzeitig ein Prolog-Fact "berechnete Wellenlänge" und ein Prolog-Fact "Störungsdeskriptor" vorhanden ist, wobei der Wert der berechnete Wellenlänge im Wellenlängenbereich des Störungsdeskriptor liegt, dann wird ein Prolog-Fact "Theoretische Ursache" in die Datenbasis eingetragen, womit also die theoretische Ursache einer Störung ermittelt ist.

Der nächste Schritt ist die Ermittlung der plausiblen Ursachen, wobei eine (theoretische) Störungsursache dann als plausibel bezeichnet wird, wenn sie durch eine Regel bekräftigt ist. Dazu sucht die wissensbasierte Auswerteeinheit WA in der Datenbasis zu jedem Prolog-Fact "Theoretische Ursache" ein eine Regel darstellendes Prolog-Fact, mit einem eine Fehlerursache am betreffenden Maschinenteil bejahenden oder verneinenden Ausdruck. In beiden Fällen wird zuerst die Liste der in der jeweiligen Regel enthaltenen Bedingungen abgearbeitet. Das Auffinden einer bejahenden Regel bekräftigt eine Maschinenkomponente als Verursacher, das Auffinden einer Regel mit einem verneinenden Ausdruck schliesst die jeweilige Komponente als Verursacher aus, so dass nach der Verifizierung der Regel der entsprechende Prolog-Fact "Theoretische Ursache" gelöscht wird.

Bei der Beschreibung von Fig. 1 wurde erwähnt, dass das Expertensystem ein Produktionssystem PS aufweist, welches dem Anwender eine Konsultation anbietet und insbesondere eine einen Bildschirm aufweisende Benutzer-Schnittstelle BS enthält. Die Benutzer-Schnittstelle BS, die für sämtliche Produktionssysteme einheitlich ist, präsentiert sich in erster Linie als "Dialog"-Bildschirm, der gemäss Fig. 4 vier Bereiche oder Fenster aufweist:

- Im sogenannten "Info"-Fenster IF werden erläuternde Informationen angezeigt, die den Anwender bei der Beantwortung der von System gestellten Fragen unterstützen sollten. Diese Informationen können kurze erläuternde Texte oder Grafiken oder beides sein. In Fig. 4 enthält das "Info"-Fenster eine Grafik mit einem Haarigkeitsdiagramm.
- Im "Dialog"-Fenster DF erscheinen einerseits die Fragen an den Bediener und andererseits dessen Antworten an das System.
- Das "Menue"-Fenster MF dient zur Erleichterung der Eingabe, indem der Bediener seine Eingabe über ein Menue vornehmen kann. Nur wenn das System zur Beantwortung einer Frage kein Menue präsentiert, muss die Antwort im "Dialog"-Fenster eingegeben werden.
- Im "Antwort"-Fenster AF wird der Dialogverlauf angezeigt. Möchte man eine früher gegebene Antwort korrigieren, so kann diese im "Antwort"-Fenster AF angewählt werden und der Dialog wird ab dieser Stelle neu geführt, wobei alle bisherigen Anworten als Standardantworten in den Fenstern DE oder MF voreingestellt sind und durch Drücken einer Taste erneut eingegeben werden können.

Der in Fig. 4 dargestellte Bildschirminhalt zeigt einen Schritt eines Dialogs in einem Regelanwendungssystem PS-H (Fig. 1), welches Hilfestellung bei der Interpretation der von einer Garnprüfanlage USTER TESTER 3 (USTER - eingetragenes Warenzeichen der Zellweger Uster AG) gelieferten Berichte leistet.

Ausgangspunkt: Eine ungenügend geschulte Laborkraft erhält ein Haarigkeitsdiagramm, in welchem Mittelwerts-Sprünge auftreten, und benutzt das Expertensystem als Interpretationshilfe, wobei der nachfolgend angegebene Dialog abläuft. Bei jedem Schritt des Dialogs ist der Inhalt der Fenster des Dialog-Bildschirms angegeben; der bei der Anzeige des Menue-Fensters jeweils unterstrichene Begriff des Menues bezeichnet die Eingabe durch die Laborkraft.

1. Schritt.

IF: USTER EXPERT gibt Ihnen Hilfestellung bei der Interpretation der Berichte vom Prüfgerät USTER TESTER 3.
DF: Welcher Bericht soll interpretiert werden?
NF: <u>Diagramm,</u> Längenvariation, Spektrogramm, Protokoll

2. Schritt

IF: Mit dem USTER TESTER können Sie Masseschwankungen, die Haarigkeit oder die Drehung prüfen.
DF: Welche Garneigenschaften soll interpretiert werden?

MF: Haarigkeit, Masse, Drehung

AF: Welcher Bericht soll interpretiert weren? Diagramm

3. Schritt

IF: Hier gibt es 2 Möglichkeiten

- EXPERT hilft Ihnen bei der Erstellung der Diagnose für einen speziellen Garnfehler.
- Erklärung der Grundlagen zu Haarigkeit und Haarigkeitsschwankungen

DF: Welche Information benötigen Sie?

MF: Interpretation eines speziellen Fehlers Allgemeine Hinweise über das Messprinzip

AF: Welcher Bericht soll interpretiert werden? Diagramm
Welche Garneigenschaft soll interpretiert werden? Haarigkeit

4. Schritt siehe Fig. 4
(Dieser Schritt kann auch automatisch erfolgen, indem das System den Mittelwertsprung selbständig erkennt, so dass an den Benützer keine Frage gestellt werden muss.)

5. Schritt

IF: keine

DF: Prüfling

MF: Kops, Kreuzspule, Vorgarn, Zwirn

AF: Welcher Bericht soll interpretiert werden? Diagramm
Welche Garneigenschaft soll interpretiert werden? Haarigkeit
Welche Information benötigen Sie? Interpretation eines speziellen Fehlers
Zeigt Ihr Diagramm solche Mittelwerts-Sprünge? ja

6. Schritt

IF: keine Anzeige

DF: Spinnsystem?

MF: Ring gekämmt, Ring kardiert, Rotor gekämmt, Rotor kardiert, Kammgarn

AF: Welche Garneigenschaft soll interpretiert werden? Haarigkeit
Welche Information benötigen Sie?
Interpretation eines speziellen Fehlers
Zeigt Ihr Diagramm solche Mittelwerts-Sprünge? ja
Prüfling?
Kreuzspule

7. Schritt

IF: Anzeige einer Kurve mit Mittelwerts-Sprüngen und einer Linie, die die Kopslänge angibt

DF: In welchem Abstand erfolgen die Mittelwerts-Sprünge?

MF: wie in der Grafik bei der Kopslänge in kürzeren Abständen

AF: Welche Information benötigen Sie?
Interpretation eines speziellen Fehlers
Zeigt Ihr Diagramm solche Mittelwerts-Sprünge? ja
Prüfling?
Kreuzspule
Spinnsystem
Ring kardiert

8. und letzter Schritt siehe Fig. 5

Zur besseren Darstellung der Aussagen oder Diagnosen stehen umfangreiche Textdateien und/oder Grafiken zur Verfügung, welche nicht an das Format des "Info"-Fensters gebunden sind. Der konkrete Ablauf eines Dialogs samt den zugehörigen Anzeigen ist einerseits durch die Regeln festgelegt, welche zuvor mit dem Wissenseditor KM (Fig. 1) eingegeben worden waren, und andererseits durch die Daten und Anworten auf die Fragen des Systems.

Wie sich dem wiedergegebenen Dialog unschwer entnehmen lässt, ist das Produktionssystem PS-H primär auf die Anwendung von Regeln spezialisiert und kann daher beispielsweise eine Art von Handbuchfunktionen erfüllen, wobei der Inhalt des Handbuchs für den Aufbau der Wissenbasis WB hierarchisch in Form eines Entscheidungsbaumes strukturiert werden muss. So kann man beispielsweise das Handbuch in Kapitel, Subkapitel, usw. einteilen und durch gezielte Fragen entscheiden, in welchen Teilpfad der Bediener geführt wird. Die Regeln und die Anworten des Bedieners legen also den Verlauf einer Konsultation fest. Die Regeln geben ausserdem auch an, welche Informationen der Anwender erhält.

Das Produktionssystem PS-D ist ein Diagnosesystem, bei dem die Suchstrategie primär durch die hierarchische Struktur des zu untersuchenden Objekts, dann eventuell durch funktionale Zusammenhänge zwischen Teilsystemen und erst an letzter Stelle durch Regeln festgelegt ist.

Wird beispielsweise eine Ringspinnmaschine in Einlaufteil, Mittelteil, Auslaufteil, usw. strukturiert, dann versucht das Diagnosesystem zunächst, eine Störung auf eine dieser Baugruppen einzugrenzen, wobei auch funktionelle Zusammenhänge zwischen diesen Baugruppen (beispielsweise der Einfluss einer fehlerhaften Komponente im Auslaufteil auf den Mittelteil) berücksichtigt werden können. Anschliessend sucht dann das System eine Stufe tiefer, indem die Aufteilung in Unterzylinder, Oberwalze, usw. betrachtet wird (siehe dazu Fig. 2).

Beim Produktionssystem PS-X besteht der wissensbasierte Teil im wesentlichen aus einem PS-H oder aus einem PS-D System und ist in eine konventionelle Umgebung integriert. Vor der Anwendung von Regeln und/oder der Erstellung von Diagnosen können mittels eines problemspezifischen Moduls Informationen aus der Wissensbasis mit aktuellen Daten verknüpft und damit neue, für die Regeln relevante Fakten generiert werden. Diagnose und Anleitungen (z.B. Reparaturanleitungen) werden möglichst umfassend mit Grafiken unterstützt. So werden beispielsweise Getriebepläne angezeigt und es besteht die Möglichkeit, ein einzelnes Objekt (z.B. ein Zahnrad) mit einem Pfeil zu markieren und/oder, gegebenfalls unter Einschluss seiner. Bezeichnung, farblich hervorzuheben.

Für den erfahrenen Anwender besteht die Möglichkeit, Ergebnisse einer Diagnose explizit zu bestätigen, zu modifizieren oder abzulehnen. Wenn beispielsweise eine periodische Störung gefunden wurde und mitsamt der Diagnose der vermutlichen Fehlerursache angezeigt wird, dann kann der Benutzer

- eine vorgeschlagene Diagnose bekräftigen,
- eine vorgeschlagene Diagnose ablehnen,
- eine neue (vom System nicht vorgeschlagene) Ursache für die Periode angeben, oder
- die Periode als unkritisch markieren.

Die auf diese Art vom Benutzer eingegebenen Informationen beeinflussen das in der Wissensbasis gespeicherte Fachwissen und werden bei zukünftigen Auswertungen mitberücksichtigt. Dadurch wird das System zu einem lernfähigen Expertensystem.

Der Dialog kann auch in der Art ablaufen, dass das System den Benutzer bei der Angabe eines Diagnosevorschlags die Frage stellt, ob dieser den Vorschlag akzeptieren könne und ihm für die Antwort folgendes Menue vorgibt:

- Ich weiss nicht
- ja, sicher
- ja, aber nur wenn ...
- nein
- nein, wenn ...

Eine weitere Möglichkeit zur Lernfähigkeit ist dadurch gegegeben, dass das System die Häufigkeit der Antworten aus einem bestimmten Menue registriert und anhand der Häufigkeiten eine Gewichtung und/oder Reihung der möglichen Anworten vornimmt, wodurch die Menues übersichtlicher und bedienungsfreundlicher werden.

In den Figuren 6 bis 8 ist ein Praxis-Beispiel für die Diagnose von mit einem USTER TESTER 3 gewonnenen Gleichmässigkeitsspektrogrammen dargestellt: Fig. 6 zeigt die auf einem Bild dargestellten Spektrogramme von 10 verschiedenen Proben (siehe dazu die EP-A-249 741). Man sieht, dass die Proben 3, 7 und 9 einen periodischen Fehler (1. Fehler) bei einer Wellenlänge von 271 mm und die Proben 5 und 10 einen solchen (2. Fehler) bei 1,89 m aufweisen.

Fig. 7 zeigt die Spektrogramm-Diagnose mit den beiden Fehlern, der Anzahl der jeweiligen fehlerhaften Kanäle (beim 1. Fehler sind es drei Kanäle und beim 2. Fehler ist es ein Kanal), mit dem CV%-Anstieg, den Anteil der fehlerhaften Proben in % und mit der Nummer der fehlerhaften Proben. Für den 1. Fehler wird basierend auf einer USTER EXPERT-Regel (Nr. 6) als Fehlerursache "Flyervibrationen" ermittelt und für den 2. Fehler sind zwei mögliche Ursachen angegeben:

- Vorverzugswechsel Getriebe Mittel-Unterzylinder Mittelteil Ringspinnmaschine: gt

Mittel-Unterzylinder Mittelteil Ringspinnmaschine: d (Der Buchstabe d bei der zweiten Ursache steht für "Durchmesser" und gt bei der ersten Ursache steht für "Getriebe").

Um entscheiden zu können, welche der beiden Ursachen zutrifft, stellt das System anschliessend die Frage, ob der Fehler bei mehreren Proben auftritt. Auf die Antwort ja (es liegen ja zwei fehlerhafte Proben vor) entscheidet sich das System für die zweite Ursache. Dies deswegen, weil sich ein Fehler im Vorverzugs-Wechsel auf mehrere Proben auswirken muss, ein Fehler im Mittel-Unterzylinder hingegen nicht.

Zur besseren Veranschaulichung zeigt dann USTER EXPERT zusätzlich als Hilfestellung den in Fig. 8 ausschnittweise dargestellten Maschinenplan, in dem die fehlerhafte Stelle deutlich sichtbar bezeichnet ist: In einem mit Farbe markierten Kästchen steht (vw) für Vorverzugs-Wechsel im Getriebe der Ringspinnmaschine.

Da das in den Fig. 6 bis 8 dargestellte Beispiel ein Fall aus der Praxis ist, konnte die Diagnose des Systems überprüft werden. Eine Rücksprache mit dem Ringspinnmeister hat ergeben, dass an die fraglichen Maschine der Vorzugs-Wechsel zu Wartungszwecken ausgefahren und nachträglich nicht mehr vorschriftsgemäss retourgesetzt worden war.

Wie gezeigt wurde, ermittelt das System die Kamine im Spektrogramm automatisch, benötigt also keine Hinweise der Bedienungsperson, dass ein Fehler vorliegt. Man kann nun, wenn das System ein ausreichendes Fachwissen aufgebaut hat, den Automatisierungsgrad weiter erhöhen, indem man den Dialog automatisch ablaufen lässt, was insofern keine Schwierigkeiten bietet, als ja das System über die meisten Informationen selbst verfügt. So weiss das System im gerade beschriebenen Fall selbst, dass der Fehler bei mehr als einer Probe auftritt. Diese Automatisierung hat sich in der betrieblichen Praxis als besonders vorteilhaft erwiesen.

## Patentansprüche

1. System zur Erstellung einer Störungsdiagnose an Produktionsmaschinen anhand einer wissensbasierten Auswertung von Signalen, welche die Qualität der hergestellten Produkte repräsentieren, mit einer Wissensbasis (WB), die das für die Auswertung erforderliche Fachwissen enthält und eine Beschreibung der zur betreffenden Produktionsmaschine gehörenden Maschinenteile mittels einer, in Form einer Baumstruktur gegliederten Komponentenhierarchie aufweist, in welcher jedes Maschinenteil durch einen Knoten in der Baumstruktur beschrieben ist, in welcher jeder abhängige Knoten von genau einem übergeordneten Knoten abhängig ist, mit zum Zugriff auf die Wissensbasis vorgesehenen Software-Einheiten und mit einer Benutzer-Schnittstelle (BS),dadurch gekennzeichnet, dass als Produkte Faser- und Filamentverbände vorgesehen sind, dass als Signale, die die Qualität der hergestellten Produkte repräsentieren, Spektrogramme durch Untersuchung von Parametern der Faser- und Filamentverbände gebildet sind, dass eine erste Auswerteeinheit (NA) zur Detektion von charakteristischen Abweichungen der Spektrogramme vorgesehen ist, welche für jede derartige Abweichung einen sogenannten Störungsdeskriptor (SD) generiert, und dass eine zweite Auswerteeinheit (WA) vorgesehen ist, welche für jeden Störungsdeskriptor anhand der Wissensbasis (WB) mögliche Störungsursachen ermittelt.

2. System nach Anspruch 1 dadurch gekennzeichnet daß, an der der Faserverband verschiedenen Verzügen unterworfen ist, dadurch gekennzeichnet, dass der Vorverzug unmittelbar und der Gesamtverzug nach seiner rechnerischen Ableitung aus der Feinheit des Vorgarns und der Garnfeinheit in die Wissensbasis (WB) eingetragen wird.

3. System nach Anspruch 2, dadurch gekennzeichnet, dass zu jeder Maschinenkomponente, welche im Faserverband eine periodische Schwankung der untersuchten Parameter hervorrufen kann, die Wellenlänge dieser Schwankung berechnet und in die Wissensbasis (WB) eingetragen wird.

4. System nach Anspruch 3, dadurch gekennzeichnet, dass die gesuchte Wellenlänge der Schwankung durch Multiplikation der Wellenlänge am Ort der jeweiligen Maschinenkomponente mit der Gesamtheit der Verzüge zwischen dem Ort der Maschinenkomponente und der Entnahmestelle der Probe berechnet wird.

5. System nach einem der Ansprüche 1 bis 4, dadurch gekennzeichnet, dass in der ersten Auswerteeinheit (NA) die durch eine Störung hervorgerufene Erhöhung des Variationskoeffizienten des untersuchten Parameters berechnet und mit einem vorgegebenen Grenzwert verglichen und dass bei Ueberschreiten dieses Grenzwertes ein Störungsdeskriptor (SD) generiert wird.

6. System nach Anspruch 5, dadurch gekennzeichnet, dass der Störungsdeskriptor (SD) Angaben über den Wellenlängenbereich der Ueberschreitung, über die Erhöhung des Variationskoeffizienten über die Anzahl der Kanäle enthält, über die sich die genannte Erhöhung erstreckt.

7. System nach den Ansprüchen 4 und 6, dadurch gekennzeichnet, dass bei Generierung eines Störungsdeskriptors (SD) dessen Wellenlängenbereich eine in der Wissensbasis (WB) enthaltene gesuchte Wellenlänge umfasst, von der zweiten Auswerteeinheit (WA) die Hypothese aufgestellt wird, dass die dieser gesuchten Wellenlänge zugeordnete Maschinenkomponente Verursacher der durch den Störungsdeskriptor beschriebenen Störung ist.

8. System nach Anspruch 7, dadurch gekennzeichnet, dass diejenigen hypothetischen Störungsursachen, die durch eine Regel bekräftigt werden, als plausibel klassiert und auf der Benutzer-Schnittstelle (BS) angezeigt werden.

9. System nach Anspruch 8, dadurch gekennzeichnet, dass die Benutzer-Schnittstelle (BS) einen Dialog-Bildschirm aufweist, auf dem unter anderem die plausiblen Störungsursachen angezeigt werden, und dass der Benutzer die Möglichkeit besitzt, angezeigte Störungsursachen zu bekräftigen oder zu verwerfen.

10. System nach Anspruch 9, dadurch gekennzeichnet, dass der Dialog-Bildschirm ein erstes Fenster (IF) zur Anzeige erläuternder Informationen, ein zweites Fenster (DF) für Fragen an den Bediener und für dessen Antworten an das System, ein drittes Fenster (MF) zur Anzeige eines Menues zur Erleichterung der Eingabe und ein viertes Fenster (AF) zur Anzeige des Dialogverlaufs aufweist.

11. System nach Anspruch 10, dadurch gekennzeichnet, dass vom Benutzer verworfene Störungsursachen in der Wissensbasis (WB) gelöscht und vom Benutzer bekräftigte Störungsursachen von der zweiten Auswerteeinheit stärker gewichtet werden.

## Claims

1. System for creating a fault diagnosis on production machines using a knowledge-based evaluation of signals which represent the quality of the products produced, having a knowledge base (WB) which contains the expert knowledge required for the evaluation and has a description of the machine parts belonging to the production machine concerned, by means of a component hierarchy which is divided in the form of a tree structure and in which each machine part is described by a node in the tree structure, in which each dependent node is dependent on precisely one superordinate node, having software units intended for access to the knowledge base and having a user interface (BS) , characterised in that fibre and filament structures are provided as products, in that, as signals which represent the quality of the products produced, spectrograms are formed by investigating parameters of the fibre and filament structures, in that a first evaluation unit (NA) is provided for the detection of characteristic deviations of the spectrograms, which unit generates a so-called fault descriptor (SD) for each such deviation, and in that a second evaluation unit (WA) is provided, which uses the knowledge base (WB) to determine possible fault causes for each fault descriptor.

2. System according to Claim 1, characterised in that the fibre structure is subjected to various drafts, characterised in that the preliminary draft is entered directly into the knowledge base (WB) and the overall draft is entered in the said knowledge base after its computational derivation from the count of the roving yarn and the yarn count.

3. System according to Claim 2, characterised in that, for each machine component which can induce a periodic fluctuation of the parameters investigated in the fibre structure, the wavelength of this fluctuation is calculated and entered into the knowledge base (WB).

4. System according to Claim 3, characterised in that the sought wavelength of the fluctuation is calculated by multiplication of the wavelength at the location of the respective machine component by the totality of drafts between the location of the machine component and the removal point of the sample.

5. System according to one of Claims 1 to 4, characterised in that, in the first evaluation unit (NA), the fault-induced increase in the coefficient of variation of the parameter investigated is calculated and compared with a predetermined limit value and in that, if this limit value is exceeded, a fault descriptor (SD) is generated.

6. System according to Claim 5, characterised in that the fault descriptor (SD) contains particulars on the wavelength range of the overshoot, on the increase in the coefficient of variation and on the number of channels over which the said increase extends.

7. System according to Claims 4 and 6, characterised in that, on generation of a fault descriptor (SD) of which the wavelength range covers a sought wavelength included in the knowledge base (WB), the hypothesis is put forward by the second evaluation unit (WA) that the machine component assigned to this sought wavelength is responsible for the cause of the fault described by the fault descriptor.

8. System according to Claim 7, characterised in that those hypothetical fault causes which are substantiated by a rule are classed as plausible and displayed on the user interface (BS).

9. System according to Claim 8, characterised in that the user interface (BS) has a dialog screen on which the plausible fault causes are displayed, inter alia, and in that the user has the possibility of substantiating or rejecting fault causes displayed.

10. System according to Claim 9, characterised in that the dialog screen has a first window (IF) for displaying explanatory information items, a second window (DF) for questions to the operator and for his replies to the system, a third window (MF) for displaying a menu to make input easier and a fourth window (AF) for displaying the course of the dialog.

11. System according to Claim 10, characterised in that fault causes rejected by the user are erased in the knowledge base (WB) and fault causes substantiated by the user are weighted more strongly by the second evaluation unit.

## Revendications

1. Système pour l'établissement d'un diagnostic de dérangement à des machines de production à l'aide d'une évaluation basée sur des connaissances de signaux qui représentent la qualité des produits fabriqués, avec une base de connaissances (WB) qui contient les connaissances professionnelles nécessaires pour l'évaluation et une description des parties de machine faisant partie de la machine de production concernée au moyen d'une hiérarchie de composants organisée sous forme d'arbre balancé, dans laquelle chaque partie de machine est décrite par un noeud dans la structure d'arbre, dans laquelle chaque noeud dépendant dépend exactement d'un noeud subordonné, avec des unités de logiciel prévues pour accéder à la base des connaissances et avec une interface d'utilisateur (BS), caractérisé en ce que des composites de fibres et de filaments sont prévus comme produits, en ce que sont formés comme signaux qui représentent la qualité des produits fabriqués, des spectrogrammes par le contrôle de paramètres des composites de fibres et de filaments, en ce qu'une première unité d'évaluation (NA) est prévue pour détecter des écarts caractéristiques des spectrogrammes, qui génère pour chacun de tels écarts un soi-disant descripteur de dérangement (SD) et en ce qu'il est prévu une deuxième unité d'évaluation (WA) qui détermine pour chaque descripteur de dérangement à l'aide de la base des connaissances (WB) des causes de dérangement possibles.

**2.** Système selon la revendication 1, caractérisé en ce que le composite de fibres est soumis à divers étirages, en ce que l'étirage préliminaire est entré directement et l'étirage total après sa déduction par calcul à partir de la finesse de la mèche de préparation et la finesse de fil dans la base des connaissances (WB).

**3.** Système selon la revendication 1, caractérisé en ce que pour chaque composant de machine qui peut provoquer dans le composite de fibres une oscillation périodique des paramètres examinés, la longueur d'onde de cette oscillation est calculée et entrée dans la base des connaissances (WB).

**4.** Système selon la revendication 3, caractérisé en ce que la longueur d'onde recherchée de l'oscillation est calculée par une multiplication de la longueur d'onde à l'emplacement du composant de machine respectif avec la totalité des étirages entre l'emplacement du composant de machine et l'emplacement de prélèvement de l'échantillon.

**5.** Système selon l'une des revendications 1 à 4, caractérisé en ce que dans la première unité d'évaluation (NA), l'augmentation provoquée par un dérangement du coefficient de variation du paramètre examiné est calculée et comparée à une valeur limite prédéterminée et en ce que lors d'un dépassement de cette valeur limite, un descripteur de dérangement (ST) est généré.

**6.** Système selon la revendication 5, caractérisé en ce que le descripteur de dérangement (ST) contient des indications sur la zone de la longueur d'onde du dépassement, sur l'augmentation du coefficient de variation sur le nombre des canaux, sur lesquels s'étend l'augmentation citée.

**7.** Système selon les revendications 4 et 6, caractérisé en ce que lors de la génération d'un descripteur de dérangement (SD), la zone de longueur d'onde de celui-ci comporte une longueur d'onde recherchée contenue dans la base des connaissances (WB), que par la deuxième unité d'évaluation (WA) l'hypothèse est formulée que le composant de machine associé à cette longueur d'onde recherchée est le générateur du dérangement décrit par le descripteur de dérangement.

**8.** Système selon la revendication 7, caractérisé en ce que les causes de dérangement hypothétiques qui sont confirmées par une règle, sont classées comme étant vraisemblables et sont indiquées sur l'interface utilisateur (BS).

**9.** Système selon la revendication 8, caractérisé en ce que l'interface utilisateur (BS) comprend un écran dialogue sur lequel sont indiquées, entre autres, les causes de dérangement vraisemblables et en ce que l'utilisateur a la possibilité de confirmer ou de rejeter les causes de dérangement indiquées.

**10.** Système selon la revendication 9, caractérisé en ce que l'écran dialogue présente une première fenêtre (IF) pour indiquer des informations explicatives, une deuxième fenêtre (DF) pour des questions à l'utilisateur et pour les réponses de celui-ci au système, une troisième fenêtre (MF) pour indiquer un menu pour faciliter l'entrée et une quatrième fenêtre (AF) pour indiquer le déroulement du dialogue.

**11.** Système selon la revendication 10, caractérisé en ce que des causes de dérangement rejetées par l'utilisateur sont supprimées dans la base des connaissances (WB) et que des causes de dérangement confirmées par l'utilisateur sont pondérées plus fortement par la deuxième unité d'évaluation.

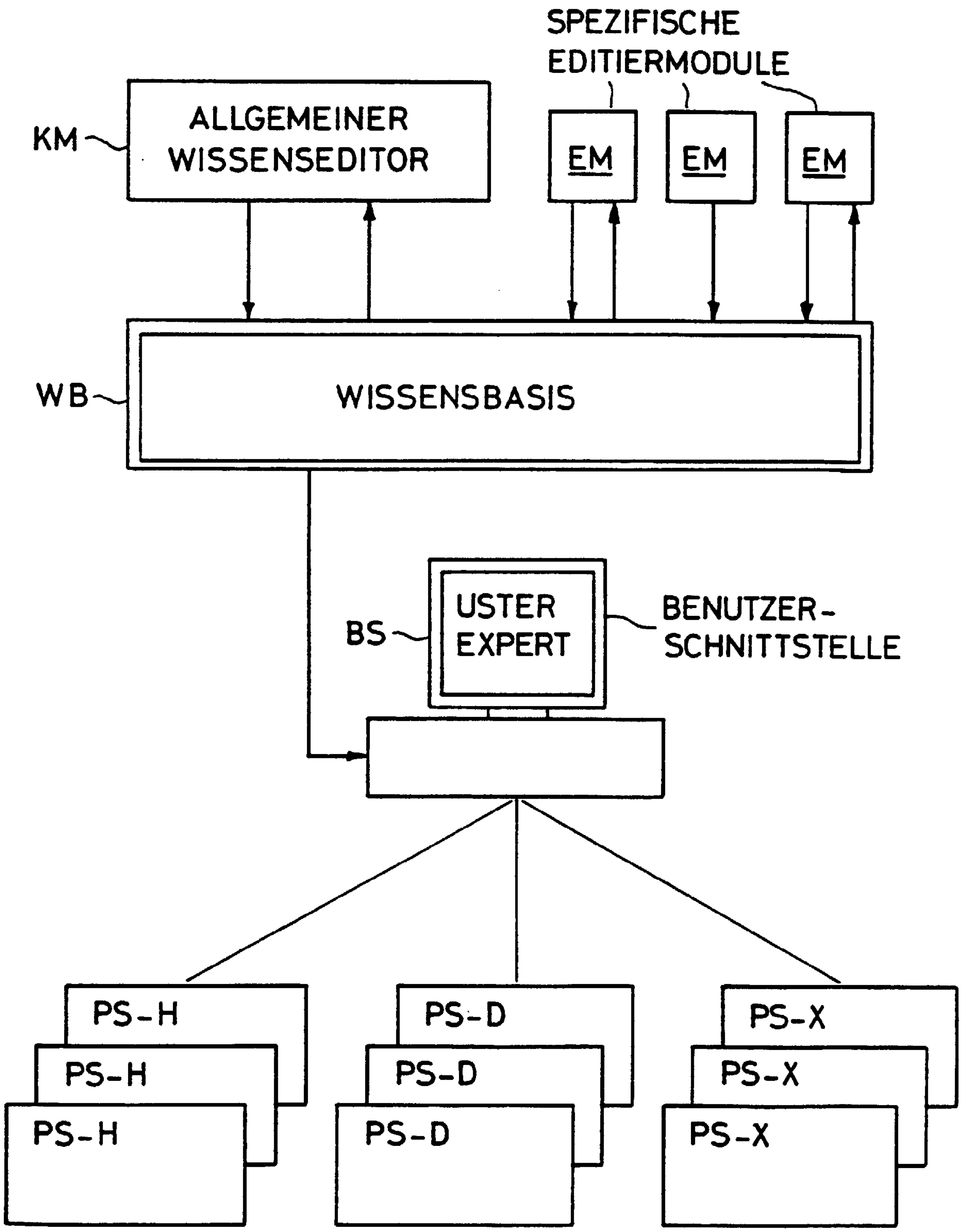
SPEZIFISCHE
EDITIERMODULE
KM
ALLGEMEINER
WISSENSEDITOR
EM
EM
EM
WB
WISSENSBASIS
BS
USTER
EXPERT
BENUTZER-
SCHNITTSTELLE
PS-H
PS-H
PS-H
PS-D
PS-D
PS-D
PS-X
PS-X
PS-X

FIG.1

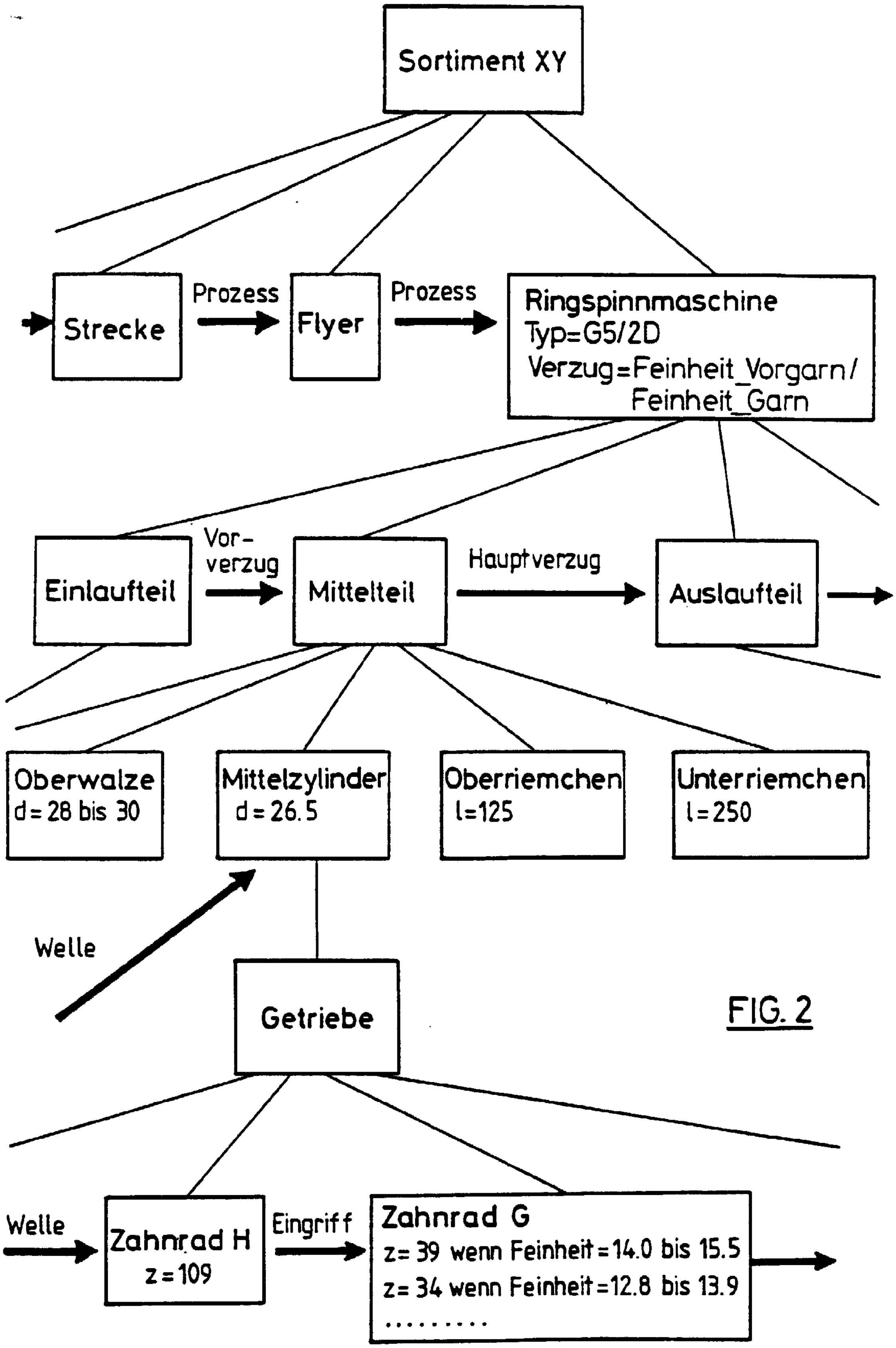
Sortiment XY
Strecke
Prozess
Flyer
Prozess
Ringspinnmaschine
Typ=G5/2D
Verzug=Feinheit_Vorgarn/
Feinheit_Garn
Einlaufteil
Vor-
verzug
Mittelteil
Hauptverzug
Auslaufteil
Oberwalze
d=28 bis 30
Mittelzylinder
d=26.5
Oberriemchen
l=125
Unterriemchen
l=250
Welle
Getriebe
Welle
Zahnrad H
z=109
Eingriff
Zahnrad G
z= 39 wenn Feinheit=14.0 bis 15.5
z= 34 wenn Feinheit=12.8 bis 13.9
.........

FIG. 2

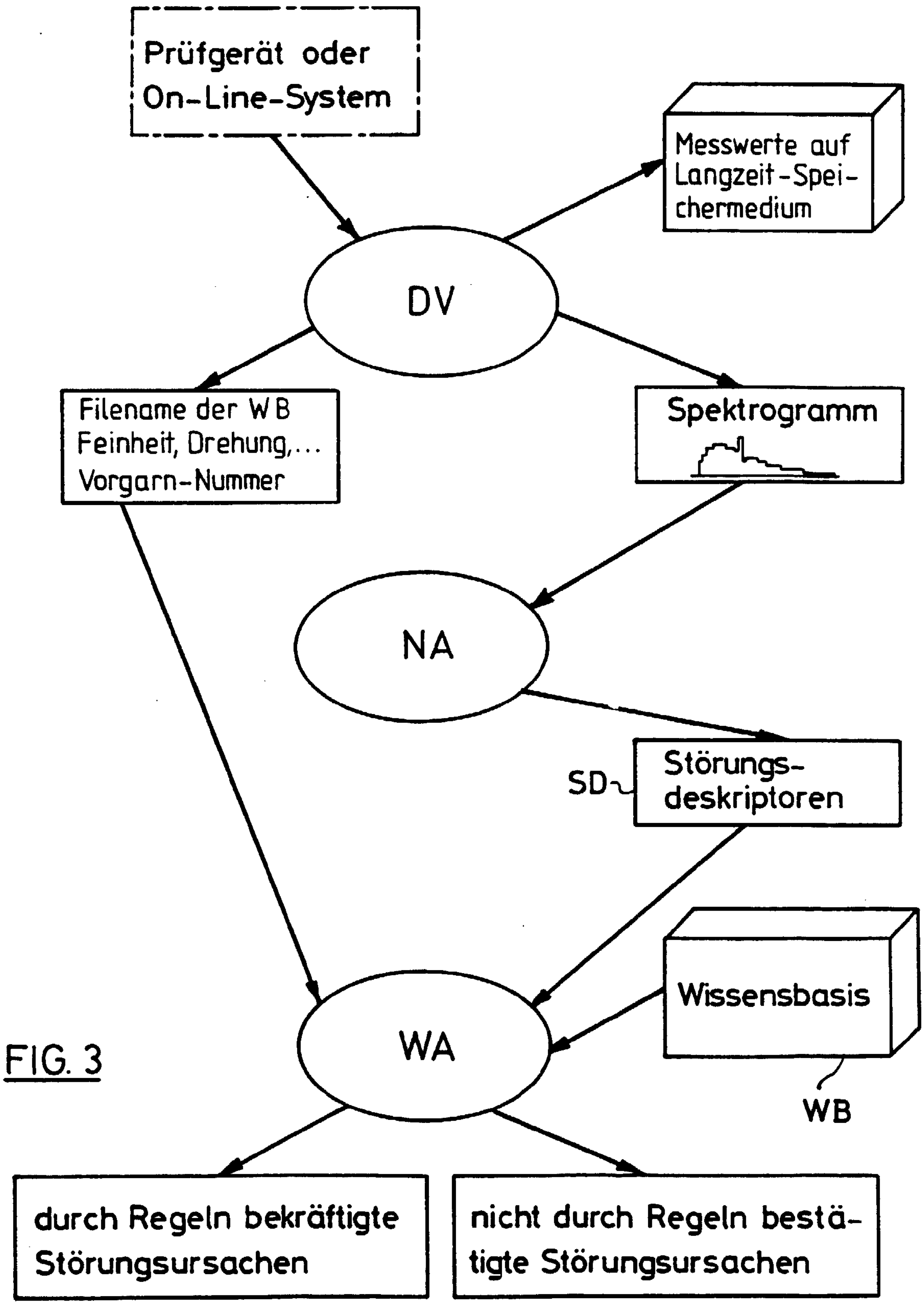
Prüfgerät oder On-Line-System
Messwerte auf Langzeit-Speichermedium
DV
Filename der WB
Feinheit, Drehung,...
Vorgarn-Nummer
Spektrogramm
NA
SD
Störungsdeskriptoren
Wissensbasis
WB
WA
durch Regeln bekräftigte Störungsursachen
nicht durch Regeln bestätigte Störungsursachen

FIG. 3

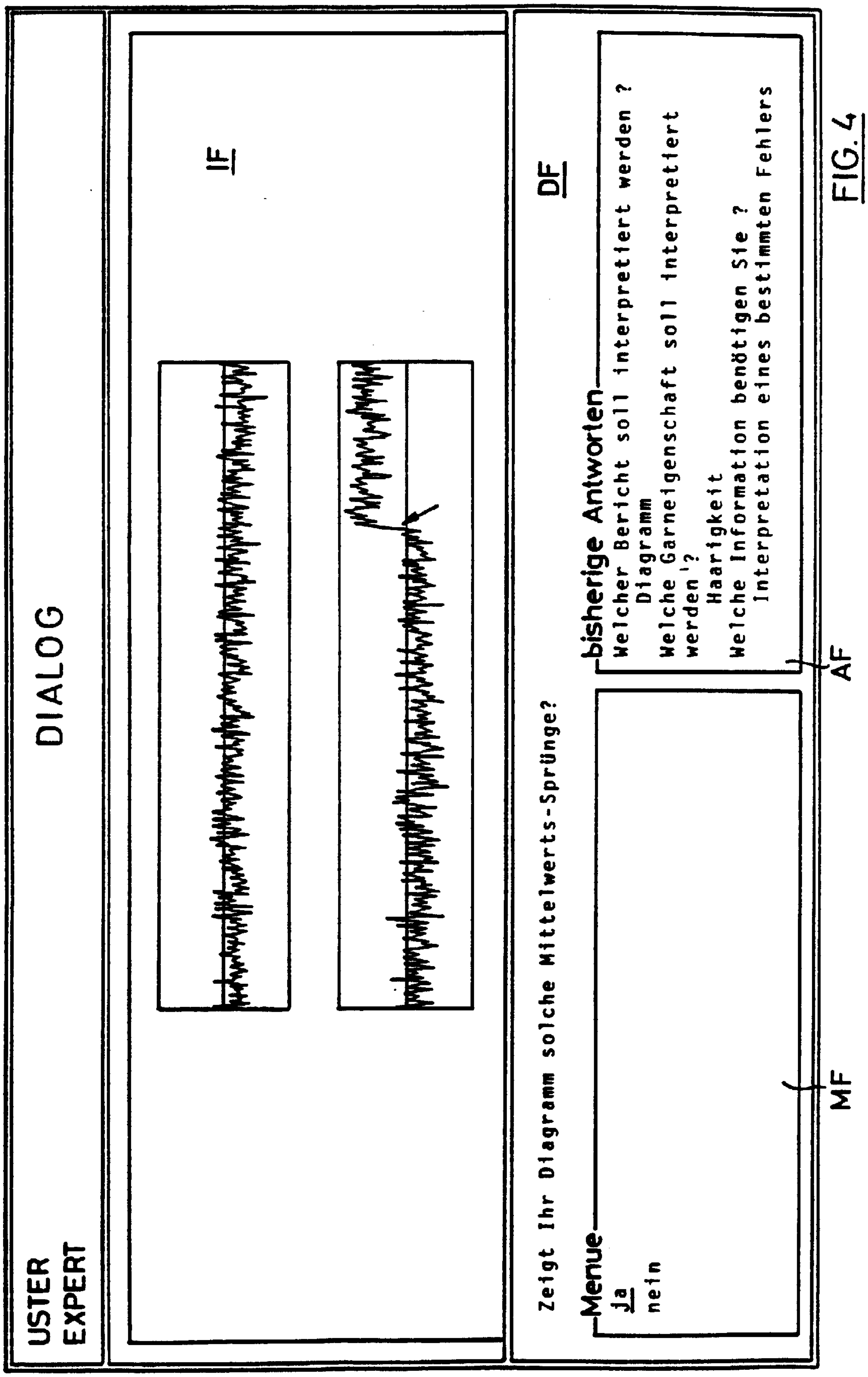
USTER
EXPERT
DIALOG
IF
Zeigt Ihr Diagramm solche Mittelwerts-Sprünge?
DF
Menue
ja
nein
bisherige Antworten
Welcher Bericht soll interpretiert werden ?
Diagramm
Welche Garneigenschaft soll interpretiert werden'?
Haarigkeit
Welche Information benötigen Sie ?
Interpretation eines bestimmten Fehlers
AF
MF

FIG. 4

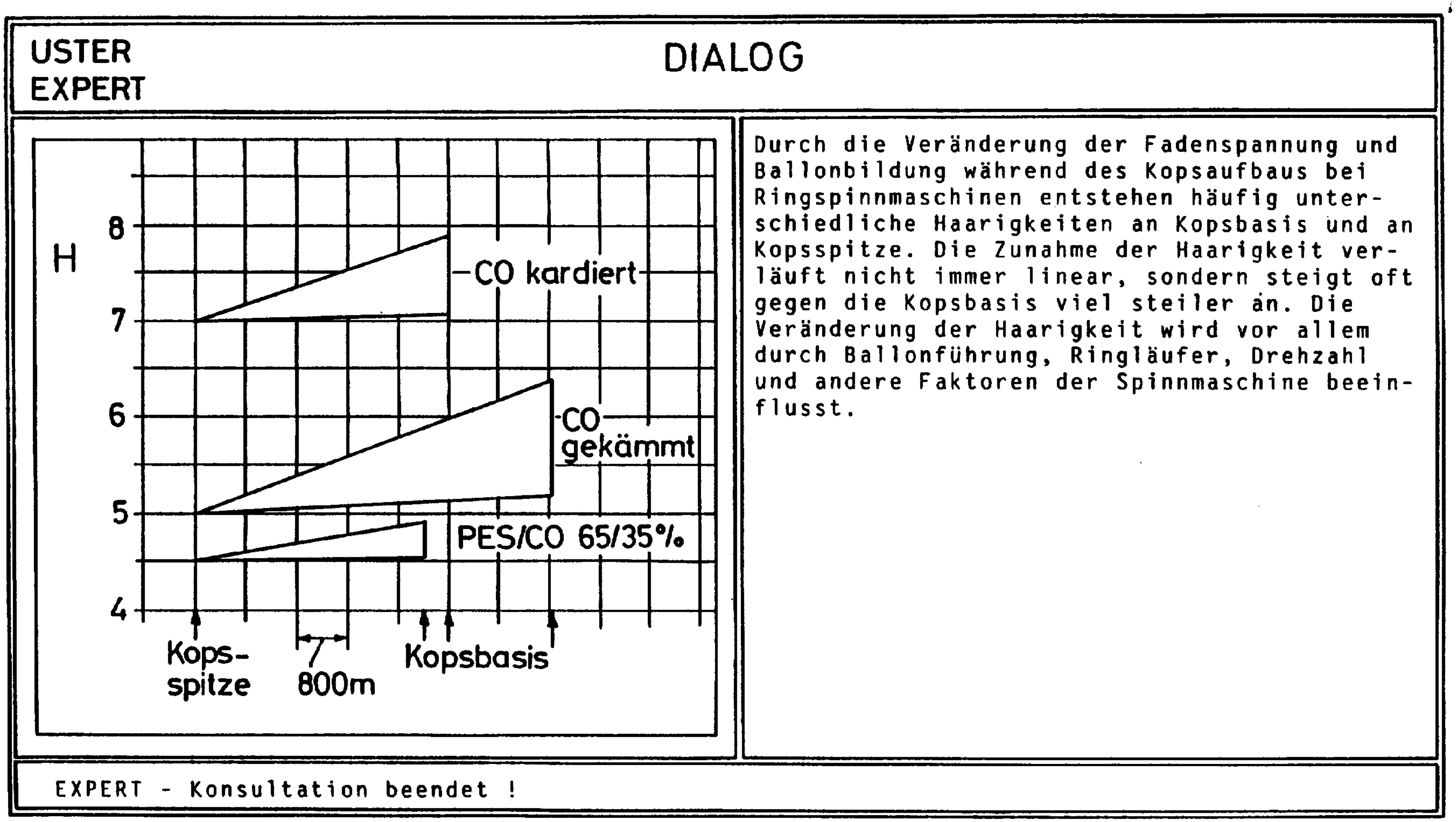
USTER
EXPERT
DIALOG
H
8
7
6
5
4
CO kardiert
CO gekämmt
PES/CO 65/35%
Kops-spitze
800m
Kopsbasis
Durch die Veränderung der Fadenspannung und Ballonbildung während des Kopsaufbaus bei Ringspinnmaschinen entstehen häufig unterschiedliche Haarigkeiten an Kopsbasis und an Kopsspitze. Die Zunahme der Haarigkeit verläuft nicht immer linear, sondern steigt oft gegen die Kopsbasis viel steiler an. Die Veränderung der Haarigkeit wird vor allem durch Ballonführung, Ringläufer, Drehzahl und andere Faktoren der Spinnmaschine beeinflusst.
EXPERT - Konsultation beendet !

FIG. 5

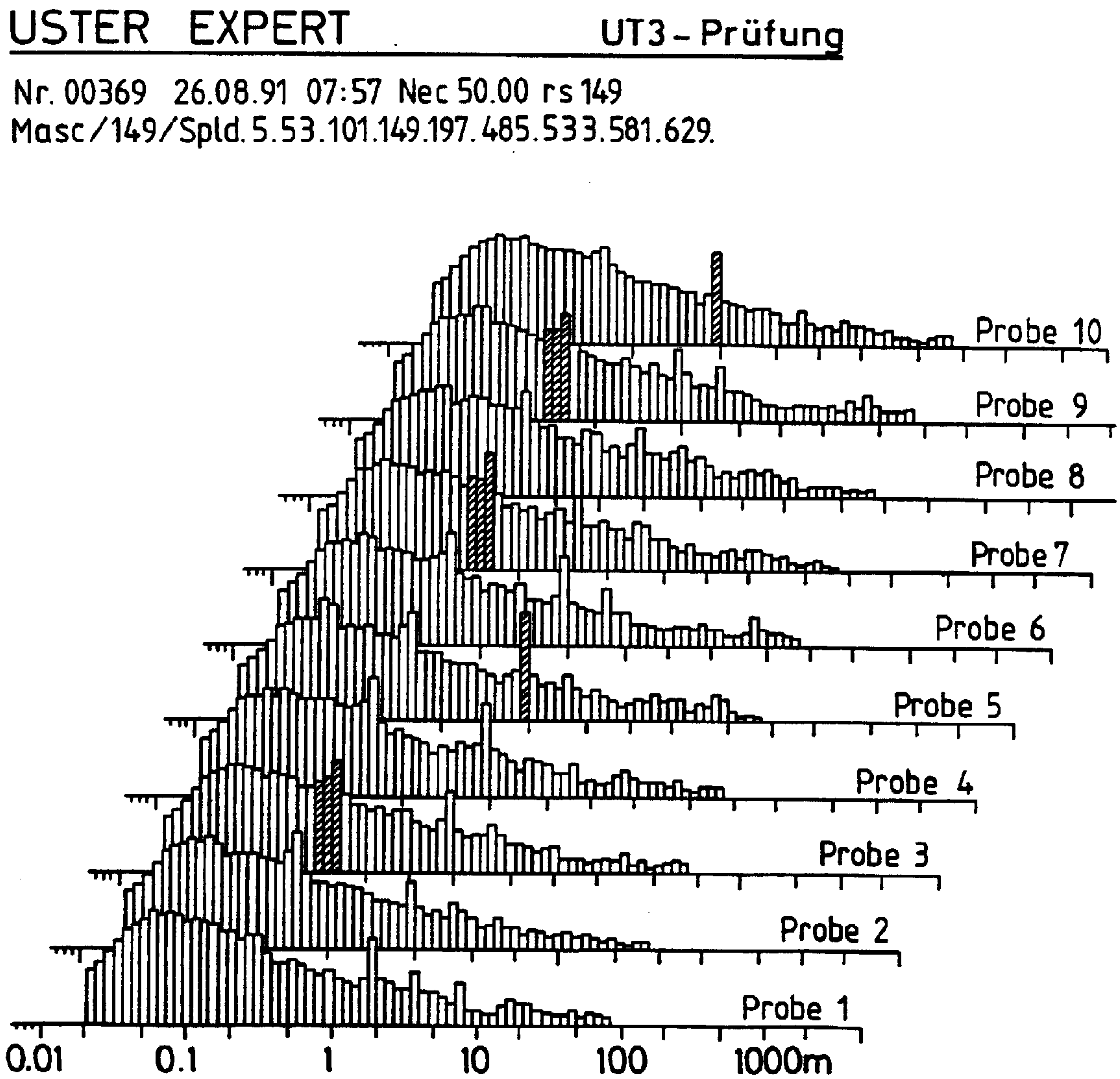
USTER EXPERT
UT3 - Prüfung
Nr. 00369 26.08.91 07:57 Nec 50.00 rs 149
Masc/149/Spld. 5.53.101.149.197.485.533.581.629.
Probe 10
Probe 9
Probe 8
Probe 7
Probe 6
Probe 5
Probe 4
Probe 3
Probe 2
Probe 1
0.01
0.1
1
10
100
1000m

FIG. 6

## USTER EXPERT Spektrogramm - Diagnose

Nr.00369 26.08.91 07:57 Nec 50.00 rs 149

Masc/149/Spld. 5.53.101.149.197.485.533.581.629.

---

271 mm 3 Kanäle . CV-Aenderung 0.27% 30% der Proben

Probe 3; Probe 7; Probe 9;

Getriebe Auslauf-Unterzylinder Auslaufteil Flyer : 1

(Flyervibrationen nach Regel 6)

---

1.89 m 1 Kanal CV-Aenderung 0.21% 20% der Proben

Probe 5; Probe 10;

Vorverzugswechsel Getriebe Mittel-Unterzylinder
Mittelteil Ringspinnmaschine : gt

Mittel-Unterzylinder Mittelteil Ringspinnmaschine : d

---

FIG. 7

## USTER EXPERT Maschinenplan

Nr.00369 26.08.91 07:57 Nec 50.00 rs 149

Masc/149/Spld.5.53.101.149.197.485.533.581.629.

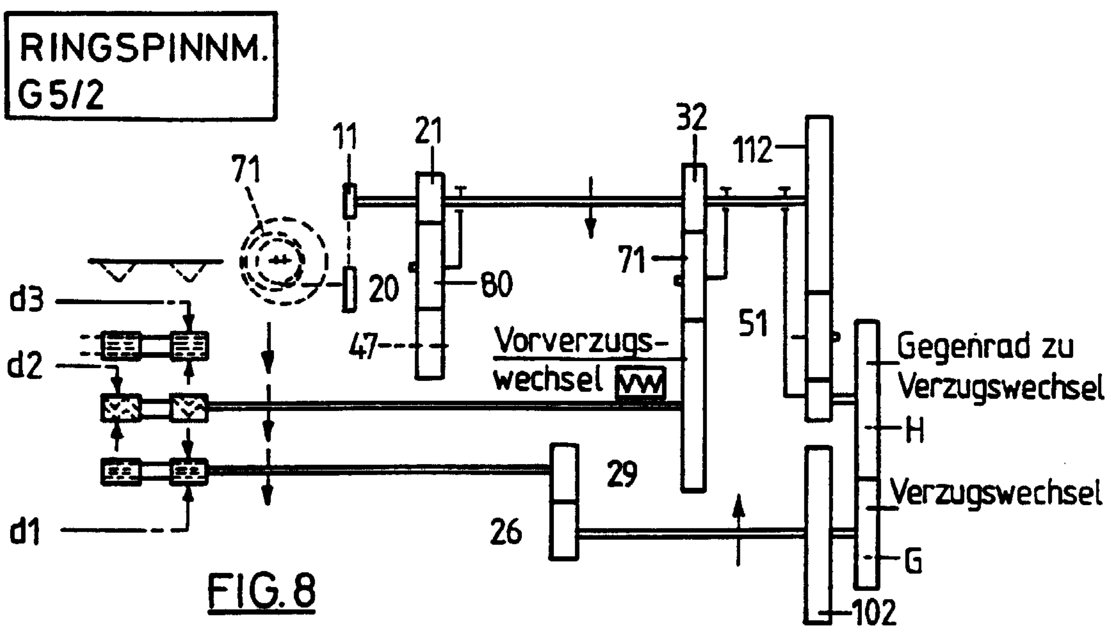


FIG. 8